# EUROPÄISCHE PATENTSCHRIFT

(11) **EP 1 715 316 B1**
(45) Veröffentlichungstag und Bekanntmachung des Hinweises auf die Patenterteilung: **05.01.2011**
(21) Anmeldenummer: 06450039.0
(22) Anmeldetag: 20.03.2006
(51) Int. Cl.: G01K 13/00, H05B 3/74

(54) **Messfühleranordnung**
Measuring sensor system
Dispositif de sonde

(30) Priorität: 19.04.2005 AT 2412005
(43) Veröffentlichungstag der Anmeldung: 25.10.2006
(73) Patentinhaber: Electrovac AG, 3400 Klosterneuburg (AT)
(72) Erfinder: Reithofer, Josef, 3424 Wolfpassing (AT); Auradnik, Christian, 3400 Klosterneuburg (AT)
(74) Vertreter: Gibler, Ferdinand

(56) Entgegenhaltungen:
- EP-A- 1 489 479
- WO-A-2004/111589
- US-A- 5 258 736

## Beschreibung

Die Erfindung betrifft eine Anordnung umfassend eine Wärmequelle, eine Heizfläche und eine Messfühleranordnung zur Ermittlung der Temperaturverhältnisse im Bereich einer von einer Wärmequelle erwärmten Heizfläche, wie z.B. einer Glaskeramik Heizplatte, welche zwischen der Wärmequelle und der Heizfläche im Wesentlichen parallel zur Heizfläche angeordnet ist, wobei die Messfühleranordnung einen ersten Messfühler umfasst, welcher einen ersten Tragkörper, insbesondere umfassend Keramik, und wenigstens eine auf dem ersten Tragkörper angeordnete temperaturabhängige erste Widerstandbahn umfasst, und die erste Widerstandsbahn des ersten Messfühlers der Heizfläche zugewandt ist und außerhalb eines temperatursensitiven Bereichs an einer Kontaktierungsstelle elektrisch kontaktiert ist, wobei wenigstens ein zweiter Messfühler vorgesehen ist, welcher einen zweiten Tragkörper, insbesondere umfassend Keramik, und wenigstens eine auf dem zweiten Tragkörper angeordnete temperaturabhängige zweite Widerstandbahn umfasst, welche außerhalb des temperatursensitiven Bereichs an einer Kontaktierungsstelle elektrisch kontaktiert ist.

Bei üblichen Elektroherden, insbesondere mit Keramikkochfeld, sind pro Heizung ein elektromechanischer Schutztemperaturbegrenzer für die Begrenzung auf die maximale Temperatur vorhanden. Wird das Kochfeld mit einer Elektronik gesteuert, so ist eine Substitution der mechanischen Temperaturbegrenzer durch elektronische Temperaturfühler möglich, da die notwendigen Leistungsschalter (Relais) bereits vorhanden sind. Bei den verwendeten elektronischen Steuereinheiten ist häufig auch im Bereich der Elektronik eines Elektroherdes ein Messfühler angeordnet.

Bekannte Temperaturfühler liefern lediglich ein unzureichendes Bild der Temperaturverteilung unter der Heizfläche. Dadurch sind die elektronischen Regelkreise nur mit ungenügenden Daten versorgt, was zu nur mangelhaft geregelten Heizflächen führt, wodurch unnötig viel Energie in Wärme umgewandelt wird.

Die WO 2004/111589 A1 zeigt eine Messfühleranordnung zur Ermittlung der Temperaturverhältnisse einer von einer Wärmequelle erwärmten Heizfläche, wie z.B. einer Glaskeramik-Heizplatte. Das Dokument zeigt eine erste Messfühleranordnung, welche die Temperatur der Heizfläche misst und eine zweite Messfühleranordnung, welche die Temperatur des Hohlraums, oder einer bestimmten Stelle im Hohlraum, misst.

In der EP 1 489 479 A1 ist ebenfalls eine Messfühleranordnung zur Ermittlung der Temperaturverhältnisse einer von einer Wärmequelle erwärmten Heizfläche dargestellt. Die erste Messfühleranordnung misst die Temperatur der Heizfläche und die zweite Messfühleranordnung ist vorgesehen, um die Temperatur eines Kochtopfs oder eines anderen Kochutensils zu messen.

Die US 5 258 736 A beschreibt die Ausgestaltung eines Temperaturmessfühlers und einer Temperaturmessfühleranordnung. Dieser Temperaturmessfühler umfasst in Parallelschaltung einen temperaturempfindlichen elektrischen Filmwiderstand und einen, ebenfalls einen elektrischen Widerstand aufweisenden, Glaskeramikträger, sodass unter einer vorbestimmten Temperatur der Messfühler die Temperatur mittels des Filmwiderstandes misst und über dieser vorbestimmten Temperatur mittels des exponentiell abfallenden elektrischen Widerstandes des Glaskeramikträgers misst.

Aufgabe der Erfindung ist es eine Anordnung der eingangs genannten Art anzugeben, welche die elektronischen Regelkreise unterstützt und mit genauen und für die Regelung der Temperatur einer Heizfläche bzw. für die Regelung der Heizleistung sinnvollen Temperaturdaten versorgt und dadurch hilft, den Wirkungsgrad einer Heizfläche zu verbessern bzw. den Stromverbrauch zu senken.

Erfindungsgemäß wird dies dadurch erreicht, dass die zweite Widerstandsbahn des zweiten Messfühlers der Wärmequelle zugewandt ist.

Dadurch sind die Temperaturen im gesamten Heizraum bekannt. Dadurch ergibt sich eine zusätzliche Sicherheit bei der Temperaturkontrolle, etwa bei Ausfall eines Sensors bzw. bei einer fehlerhaften Ansteuerung. Darüber hinaus wird dadurch die Genauigkeit der Temperaturmessung verbessert. Durch Kenntnis der Temperatur der Wärmequelle kann bereits vor Erreichen der entsprechenden Temperatur an der Heizfläche auf diese zu erwartende Temperatur geschlossen werden und die Regelung der Temperatur bzw. die Regelung der Wärmequelle entsprechend angepasst und verfeinert werden. Dadurch wird schneller die gewünschte Temperatur an der Heizfläche erreicht, bzw. etwa beim Halten einer Temperatur deutlich Energie gespart, da die Heizflächentemperatur und die Wärmequellentemperatur optimal aufeinander abgestimmt werden können. Da die verwendeten Temperatursensoren sehr preiswert sind, entsteht durch die Verwendung von zwei Temperatursensoren kein Nachteil hinsichtlich der Kosten. Für die Betriebssicherheit und Effizienz des Kochfeldes ist es wichtig, im Betrieb zu jedem Zeitpunkt die Temperatur der Kochfeldoberfläche und der Wärmequelle zu kennen. Zusätzlich erlaubt die Kenntnis dieser beiden Temperaturen, wenn in einer geeigneten Recheneinheit abgelegt, die Bestimmung eines Temperaturkennlinienfeldes innerhalb der Heizeinheit. Dies wiederum kann zur Kalibrierung und Selbstjustierung der Heizeinheit genutzt werden.

In Weiterführung der Erfindung kann vorgesehen sein, dass die erste Widerstandbahn und/oder die zweite Widerstandbahn eine Mäanderform aufweisen, und vorzugsweise in Dickschicht-Technik ausgeführt sind. Dadurch kann auf einfache Weise der für den konkreten Anwendungsfall bestgeeignete Widerstandsverlauf erreicht werden.

In diesem Zusammenhang kann vorgesehen sein, dass der erste Messfühler und/oder der zweite Messfühler im Wesentlichen baugleich ausgeführt sind oder dass der zweite Messfühler größer als der erste Messfühler ausgeführt ist. Dadurch ist eine einfache und kostengünstige Fertigung und Lagerhaltung möglich. Wenn der zweite Messfühler größer als der Erste ist, so schattet er diesen vor der Hitze der Wärmequelle ab, wodurch die Messungen des Ersten genauer werden.

In Weiterführung der Erfindung kann vorgesehen sein, dass der zweite Messfühler strahlungsabsorbierend ausgeführt ist. Dadurch schattet er den ersten Messfühler vor der Hitze der Wärmequelle ab, wodurch die Messungen des Ersten genauer werden.

In diesem Zusammenhang kann in Weiterführung der Erfindung vorgesehen sein, dass die erste Widerstandbahn und/oder die zweite Widerstandbahn zwischen der Kontaktierungsstelle und dem temperatursensitiven Bereich einen größeren, insbesondere einen doppelten, Querschnitt aufweisen als im temperatursensitiven Bereich. So wird der elektrische Widerstand pro Länge der Widerstandsbahn in diesem Bereich wesentlich herabgesetzt und somit der Einfluss auf die Temperaturmessung in diesem Bereich gering gehalten.

Gemäß einer weiteren Ausführungsform der Erfindung kann vorgesehen sein, dass sich die Messfühleranordnung zur Verbesserung der mechanischen Stabilität gegen das freie, von der Kontaktierungsstelle abgekehrte Ende hin verjüngt. So kann bei ausreichender mechanischer Stabilität der Tragkörper möglichst leicht und materialsparend gehalten werden, wobei insbesondere am, von der Kontaktierung abgekehrten Ende die Abschattung der Heizwendel durch den Tragkörper minimal gehalten werden kann, oder aber wählbar groß und ortsspezifisch dimensioniert sein kann, um am Kochfeld bzw. der Heizfläche gewünschte Temperaturgradienten einzustellen.

In Weiterführung der Erfindung kann vorgesehen sein, dass die Messfühleranordnung im Bereich der Kontaktierungsstelle einen aufgeweiteten Bereich aufweist, wobei der Übergang zum übrigen, schmäleren Bereich der Messfühleranordnung, vorzugsweise konkav, ausgerundet ist. Dadurch kann eine bezogen auf die mechanische Stabilität optimale Materialausnützung erreicht werden.

In diesem Zusammenhang kann in Weiterführung der Erfindung vorgesehen sein, dass die Länge der ersten Widerstandbahn und/oder der zweiten Widerstandbahn im temperatursensitiven Bereich wenigstens 200mm beträgt. Dadurch wird die Temperatur über einen Bereich großer räumlicher Ausdehnung aufgenommen, was der Genauigkeit zugute kommt.

Gemäß einer weiteren Ausführungsform der Erfindung kann vorgesehen sein, dass zur Kontaktierung der ersten Widerstandbahn und/oder der zweiten Widerstandbahn wenigstens ein Kontaktierungsstück aus elastisch federndem Material vorgesehen ist, welches mit dem Tragkörper verbunden, vorzugsweise vernietet ist. So kann eine auch bei oftmaligen Wechseltemperaturbeanspruchungen nachhaltige Kontaktierung hergestellt werden.

Gemäß wieder einer anderen Ausführungsform der Erfindung kann vorgesehen sein, dass die Widerstandsbahn des ersten Messfühlers und/oder des zweiten Messfühlers mit einer geschlossen, thermisch leitenden Passivierschicht isoliert ist. So wird die Widerstandsbahn zuverlässig vor chemischen Einflüssen geschützt und behält länger ihre thermoelektrischen Eigenschaften, sodass eine zeitliche Drift des Messbereiches minimiert wird. Dadurch können etwa auch Nieten verdeckt bzw. zugedeckt werden.

In weiterer Ausgestaltung der Erfindung kann vorgesehen sein, dass zwischen dem ersten Messfühler und dem zweiten Messfühler ein Halteelement angeordnet ist. Dadurch kann ein definierter Abstand eingehalten werden. Ein Haltelement dient auch der Isolation des ersten Messfühlers.

In Weiterbildung der Erfindung kann vorgesehen sein, dass das Halteelement als Bügel und/oder wannenförmig ausgeführt ist, wobei vorzugsweise in dem vom Bügel aufgespannten Raum und/oder in der Wanne ein Isoliermaterial angeordnet ist. Dadurch wird ein einfaches und steifes Halteelement geschaffen, welches Platz für Isolationsmaterial aufweist.

Eine andere mögliche Ausführungsform kann darin bestehen, dass ein Boden der Wanne Verstärkungsrillen umfasst, wobei die dadurch gebildeten Hohlräume der Isolation dienen. Dadurch wird die Isolation einfach und wirkungsvoll verbessert.

Gemäß einer weiteren Ausbildung der Erfindung kann vorgesehen sein, dass an dem zweiten Messfühler und/oder dem Halteelement eine, sich gegen den ersten Messfühler abstützende Federzunge angeordnet ist. Dadurch kann eine genaue Auflage des ersten Messfühlers auf der Heizfläche erreicht werden.

Eine Variante der Erfindung kann darin bestehen, dass der zweite Messfühler zumindest bereichsweise mit dem Halteelement verbunden ist, und/oder dass das Halteelement eine Aufnahme für den ersten Messfühler aufweist. Dadurch ist eine exakte Lagerung des zweiten Messfühlers möglich bzw. kann dadurch die Planlage des ersten Messfühlers unterstützt werden. Durch Anordnung in einer Aufnahme kann ein Hohlraum in der Aufnahme geschlossen gehalten werden, wobei die Luft im Hohlraum als Isolator wirkt.

In weiterer Ausgestaltung der Erfindung kann vorgesehen sein, dass der erste Messfühler, insbesondere der erste Tragkörper, im Bereich der Kontaktierungsstelle mittels wenigstens einem elastisch federnden Verbindungsmittel, vorzugsweise einer Feder, insbesondere einer Metallfeder, vor allem einer U-Feder oder Z-Feder, mit dem zweiten Messfühler und/oder dem Halteelement verbunden ist. Dadurch kann eine genaue Auflage des ersten Messfühlers auf der Heizfläche erreicht werden.

In Weiterbildung der Erfindung kann vorgesehen sein, dass die elastisch federnden Verbindungsmittel thermisch stabil mit dem ersten Messfühler, dem zweiten Messfühler und/oder dem Halteelement verbunden sind, insbesondere mittels Schrauben und/oder Nieten. Dadurch kann sichergestellt werden, dass such bei den dauerhaft hohen Temperaturen im Raum zwischen Heizfläche und Wärmequelle die elastisch federnden Verbindungsmittel fest verbunden sind.

In weiterer Ausgestaltung der Erfindung kann vorgesehen sein, dass der erste Messfühler im Bereich der Kontaktierungsstelle eine stufenförmige Absenkung aufweist, welche tiefer ist als die Mittel der thermisch stabilen Verbindung, wobei bei vollständig in der Aufnahme des Halteelements angeordnetem ersten Messfühler die erste Widerstandbahn im Wesentlichen parallel zur zweiten Widerstandsbahn angeordnet ist. Dadurch kann auch bei Verwendung von Schrauben oder Nieten eine möglichst plane Auflage des ersten Messfühlers auf der Heizfläche sichergestellt werden, da die Nietenköpfe nicht auf der Heizfläche aufliegen.

In Weiterbildung der Erfindung kann vorgesehen sein, dass der erste Tragkörper im Bereich der stufenförmigen Absenkung mehrteilig ausgeführt ist. Dadurch kann ein besonders einfacher Tragkörper gebildet werden.

Eine andere mögliche Ausführungsform kann darin bestehen, dass ein im Wesentlichen winkelförmiger Haltebügel vorgesehen ist, welcher mit dem zweiten Messfühler und/oder dem Halteelement verbunden, insbesondere vernietet oder verschraubt, ist. Dadurch kann eine einfache und flexible Anbindung an die Umgebung bzw. den Heizraum oder den Ofen geschaffen werden.

Gemäß einer weiteren Ausbildung der Erfindung kann vorgesehen sein, dass in Betriebslage die erste Widerstandsbahn plan auf der Heizfläche aufliegt und/oder im Wesentlichen plan aufliegt und einen durch die Köpfe der Nieten bedingten Keilspalt einschließt. Dadurch wird eine möglichst direkte Kopplung des ersten Messfühlers mit der Heizfläche erreicht und eine möglichst akkurate Temperaturanzeige.

Eine Variante der Erfindung kann darin bestehen, dass der Haltebügel eine Aufnahme, insbesondere eine Einschubaufnahme, für den zweiten Messfühler aufweist. Dadurch kann der zweite Messfühler einfach aufgenommen und gegebenenfalls ausgetauscht werden.

In weiterer Ausgestaltung der Erfindung kann vorgesehen sein, dass eine, in Gebrauchslage vertikale Fläche des Haltebügels ein vertikal verlaufendes Langloch aufweist zur Montage und Justage. Dadurch ist eine einfache Montage und Justage der Messfühleranordnung möglich.

Die Erfindung wird unter Bezugnahme auf die beigeschlossenen Zeichnungen, in welchen besonderes bevorzugte Ausführungsformen dargestellt sind, näher beschrieben. Dabei zeigt:
Fig. 1 eine erste Ausführungsform einer erfindungsgemäßen Messfühleranordnung in axonometrischer Darstellung;
Fig. 2 eine Ausführungsform gemäß Fig. 1 im Seitenriss;
Fig. 3 eine Ausführungsform gemäß Fig. 1 im Kreuzriss;
Fig. 4 eine zweite Ausführungsform einer erfindungsgemäßen Messfühleranordnung in axonometrischer Darstellung;
Fig. 5 eine Ausführungsform gemäß Fig. 4 im Seitenriss;
Fig. 6 eine Ausführungsform gemäß Fig. 4 im Kreuzriss;
Fig. 7 eine dritte Ausführungsform einer erfindungsgemäßen Messfühleranordnung in axonometrischer Darstellung;
Fig. 8 eine Ausführungsform gemäß Fig. 7 im Seitenriss;
Fig. 9 eine Ausführungsform gemäß Fig. 7 im Kreuzriss;
Fig. 10 eine vierte Ausführungsform einer erfindungsgemäßen Messfühleranordnung in axonometrischer Darstellung;
Fig. 11 eine Ausführungsform gemäß Fig. 10 im Seitenriss;
Fig. 12 eine Ausführungsform gemäß Fig. 10 im Kreuzriss;
Fig. 13 eine fünfte Ausführungsform einer erfindungsgemäßen Messfühleranordnung im Seitenriss;
Fig. 14 eine Ausführungsform gemäß Fig. 13 im Kreuzriss;
Fig. 15 eine sechste Ausführungsform einer erfindungsgemäßen Messfühleranordnung in axonometrischer Darstellung;
Fig. 16 eine Ausführungsform gemäß Fig. 15 im Seitenriss;
Fig. 17 eine Ausführungsform gemäß Fig. 15 im Kreuzriss;
Fig. 18 eine weitere Ausführungsform im Kreuzriss;
Fig. 19 eine Messfühleranordnung mit einer Wärmequelle in axonometrischer Darstellung;
Fig. 20 eine Anordnung gemäß Fig. 19 im Kreuzriss;
Fig. 21 eine mögliche Ausführungsform eines ersten Messfühlers in Draufsicht;
Fig. 22 eine weitere Ausführungsform eines ersten Messfühlers in Draufsicht; und
Fig. 23 eine weitere Ausführungsform eines ersten Messfühlers in Draufsicht;

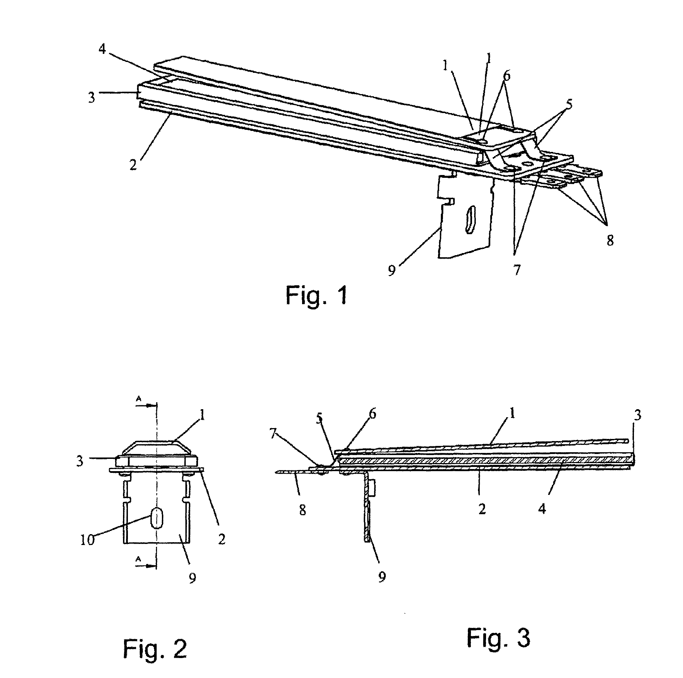

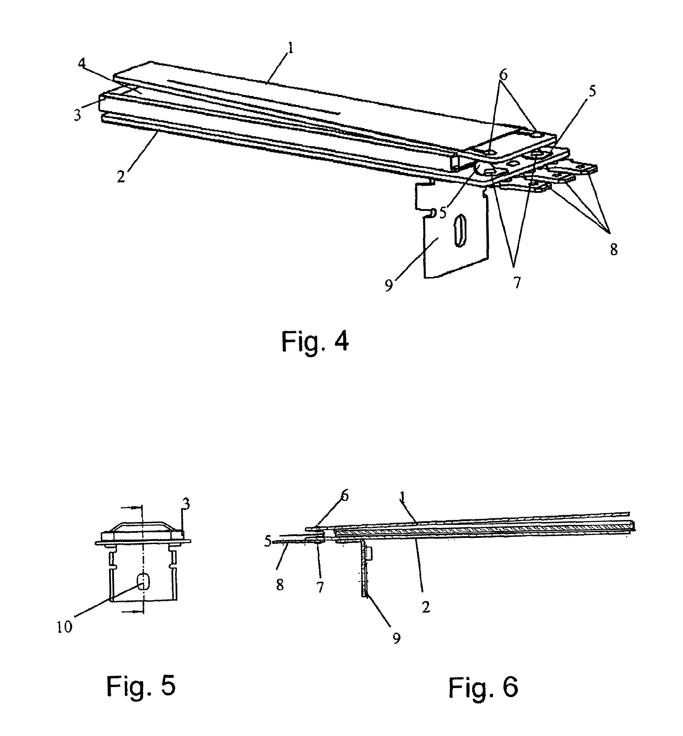

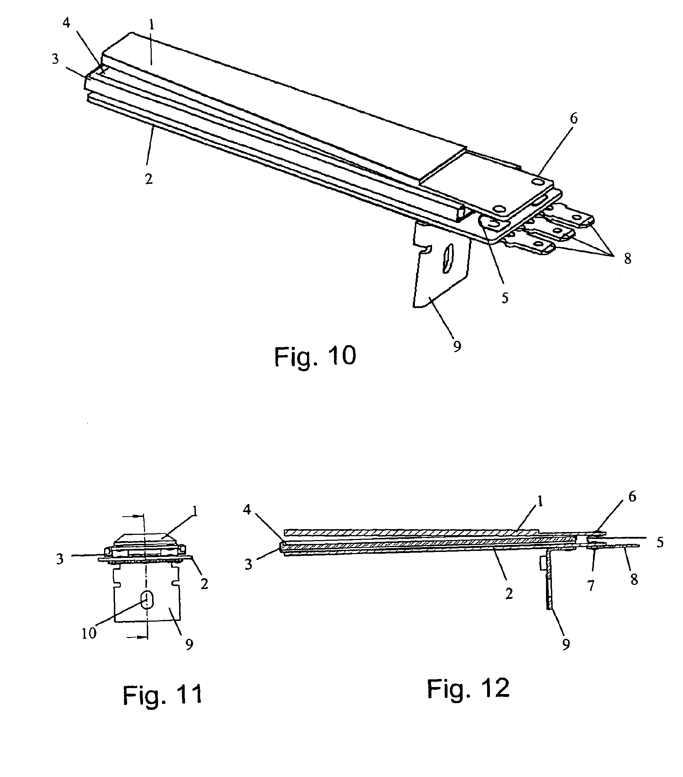

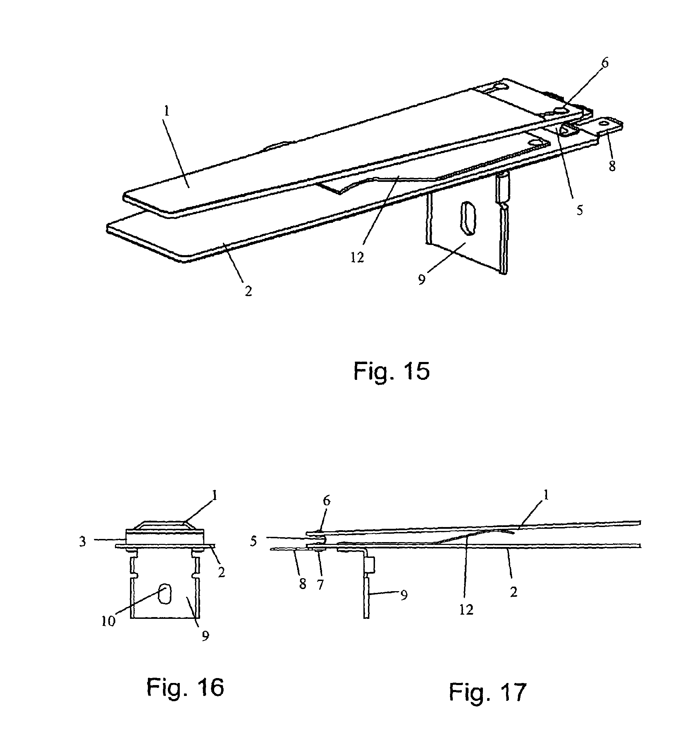

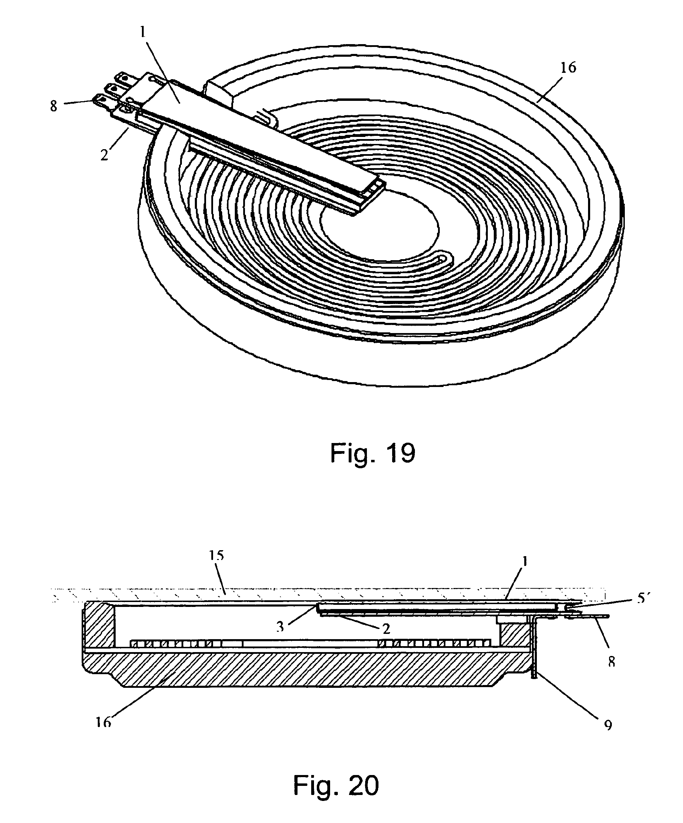

Die Fig. 1 bis 23 zeigen verschiedene Ausführungsformen bzw. Details unterschiedlicher bevorzugter Ausführungsformen einer Messfühleranordnung zur Ermittlung der Temperaturverhältnisse im Bereich einer von einer Wärmequelle 16 erwärmten Heizfläche 15, wie z.B. einer Glaskeramik Heizplatte, welche zwischen der Wärmequelle 16 und der Heizfläche 15 im Wesentlichen parallel zur Heizfläche 15 angeordnet ist, wobei die Messfühleranordnung einen ersten Messfühler 1 umfasst, welcher einen ersten Tragkörper, insbesondere umfassend Keramik, und wenigstens eine auf dem ersten Tragkörper angeordnete temperaturabhängige erste Widerstandbahn 23 umfasst, und die erste Widerstandsbahn 23 des ersten Messfühlers 1 der Heizfläche 15 zugewandt ist und außerhalb eines temperatursensitiven Bereichs an einer Kontaktierungsstelle 8 elektrisch kontaktiert ist, wobei wenigstens ein zweiter Messfühler 2 vorgesehen ist, welcher einen zweiten Tragkörper, insbesondere umfassend Keramik, und wenigstens eine auf dem zweiten Tragkörper angeordnete temperaturabhängige zweite Widerstandbahn umfasst, welche außerhalb des temperatursensitiven Bereichs an einer Kontaktierungsstelle 8 elektrisch kontaktiert ist, und die zweite Widerstandsbahn des zweiten Messfühlers der Wärmequelle 16 zugewandt ist.

Die bevorzugten Ausführungsformen weisen einen zumindest äquivalenten Aufbau auf. Ein erster Messfühler 1 ist derart angeordnet, dass dieser bei eingebauter Messfühleranordnung möglichst plan und direkt auf der Unterseite einer Heizfläche 15 zu liegen kommt. Bevorzugt ist der Einsatz in Verbindung mit Glaskeramikflächen bei Küchenherden vorgesehen. Die bevorzugten Abmessungen richten sich daher nach dem Einsatz bei derartigen Herden.

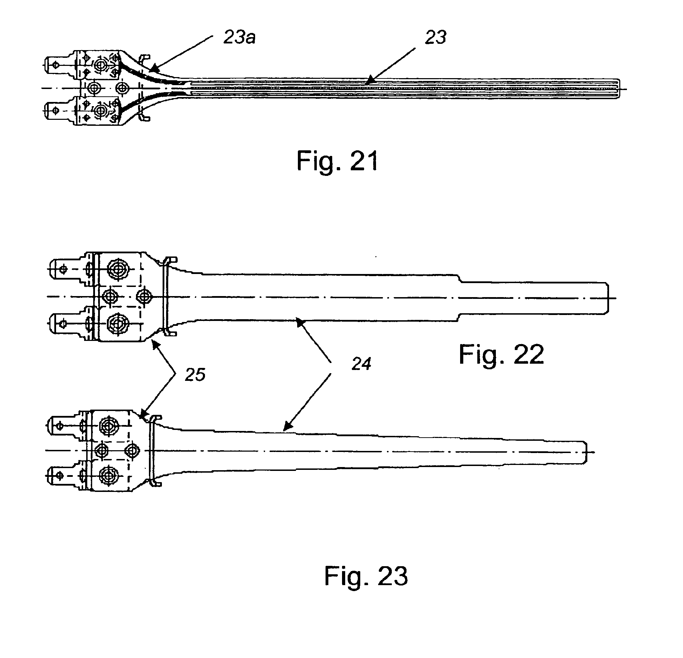

Bei den bevorzugten Ausführungsformen, wie etwa eine in Fig. 21 dargestellt ist, kann vorgesehen sein, dass die erste Widerstandbahn 23 und/oder die zweite Widerstandbahn eine Mäanderform aufweisen, und vorzugsweise in Dickschicht-Technik ausgeführt sind. Es kann jede Art einer Mäanderform vorgesehen sein. Durch die Form des Mäanders kann der Bereich welcher besonders sensitiv temperaturaufgelöst werden soll festgelegt werden. Es kann auch kein Mäander vorgesehen sein. Anstatt Dickschichttechnik, welche bevorzugt im Siebdruckverfahren hergestellt wird, kann auch Dünnschichttechnik oder ein anderes Verfahren angewandt werden.

Es kann vorgesehen sein, dass der erste Messfühler 1 und/oder der zweite Messfühler 2 im Wesentlichen baugleich ausgeführt sind, wodurch sich eine besondere Einsparung hinsichtlich der Teilevielfalt ergibt. Bevorzugt ist allerdings vorgesehen, dass der zweite Messfühler 2 größer als der erste Messfühler 1 ausgeführt ist, wodurch dieser den ersten Messfühler 1 gegen die Strahlungswärme der Wärmequelle abschattet. Dies wird noch positiv unterstützt, wenn der zweite Messfühler 2 strahlungsabsorbierend ausgeführt ist.

Der Temperaturmessbereich kann weiters dadurch angepasst werden, dass die erste Widerstandbahn 23 und/oder die zweite Widerstandbahn zwischen der Kontaktierungsstelle 8 und dem temperatursensitiven Bereich einen größeren, insbesondere einen doppelten, Querschnitt 23a aufweisen als im temperatursensitiven Bereich. Größerer Querschnitt bedeutet geringerer Widerstand und geringere Temperatursensitivität, was im Randbereich durchaus gefragt sein kann.

Zur Verbesserung der mechanischen Stabilität kann vorgesehen sein, dass sich die Messfühleranordnung gegen das freie, von der Kontaktierungsstelle 8 abgekehrte Ende hin verjüngen. Dies ist bei den dargestellten bevorzugten Ausführungsformen der Fall. Dadurch wird auch nur ein geringer Teil der Wärmequelle 16 gegenüber der Heizfläche 15 abgeschattet. Zusätzlich kann dieser Effekt dadurch unterstützt werden, dass die Messfühleranordnung im Bereich der Kontaktierungsstelle 8 einen aufgeweiteten Bereich 25 aufweist, wobei der Übergang zum übrigen, schmäleren Bereich 24 der Messfühleranordnung, vorzugsweise konkav, ausgerundet ist.

Mittels der Länge der Widerstandsbahnen kann die Temperatursensitivität angepasst werden. Daher kann es für eine hohe Temperatursensitivität vorteilhaft sein, wenn die Länge der ersten Widerstandbahn 23 und/oder der zweiten Widerstandbahn im temperatursensitiven Bereich wenigstens 200mm beträgt.

Die Widerstandsbahnen müssen dauerhaft unter stark wechselnden thermischen Bedingungen sicher elektrisch kontaktiert werden. Dabei hat es sich als besonders Vorteilhaft erwiesen, wenn zur Kontaktierung der ersten Widerstandbahn 23 und/oder der zweiten Widerstandbahn wenigstens ein Kontaktierungsstück aus elastisch federndem Material vorgesehen ist, welches mit dem Tragkörper verbunden, vorzugsweise vernietet ist.

Bei einer besonders bevorzugten Ausführungsform kann vorgesehen sein, dass die Widerstandsbahn 23 des ersten Messfühlers 1 und/oder des zweiten Messfühlers 2 mit einer geschlossen, thermisch leitenden Passivierschicht isoliert ist. Eine derartige Passivierschicht kann, sofern diese dick genug ausgeführt ist auch eventuelle Unebenheiten, wie beispielsweise Schraubenköpfe und/oder Nieten 6, 7 verdecken bzw. verhüllen und dergestalt zu einer besseren Planlage vor allem des ersten Messfühlers 1, vor allem an der Heizfläche 15 beitragen.

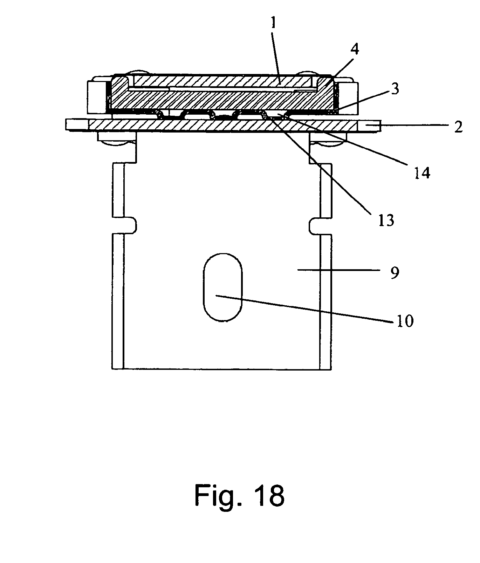

Da der erste Messfühler 1 von der Wärmequelle 16 beeinflusst wird, ist es vorteilhaft diesen gegenüber der Wärmequelle 16 zu isolieren. Daher kann es vorteilhaft sein, dass zwischen dem ersten Messfühler 2 und dem zweiten Messfühler 3 ein Halteelement 3, 4 angeordnet ist. Dieses Halteelement 3, 4 kann als Bügel und/oder wannenförmig ausgeführt sein, wobei vorzugsweise in dem vom Bügel aufgespannten Raum und/oder in der Wanne 4 ein Isoliermaterial angeordnet ist. Das Halteelement 3, 4 kann aus jedem thermisch stabilen Material, vorzugsweise Keramik oder rostfreier Stahl, ausgeführt sein. Durch Verstärkungsrillen 13, welche im Boden der Wanne 4 angeordnet sind, werden Hohlräume 14 gebildet, welche der Isolation dienen, wie in Fig. 18 dargestellt.

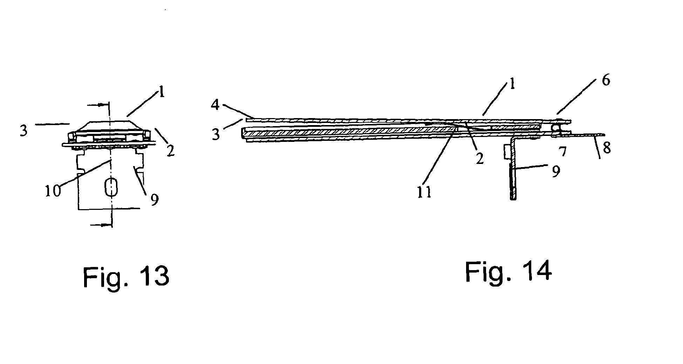

Das Anpressen des ersten Messfühlers 1 an die Heizfläche 15 wird auf einfache Weise durch eine sich gegen den ersten Messfühler 1 abstützende Federzunge 11, 12 unterstützt, welche an dem zweiten Messfühler 2 und/oder dem Halteelement 3, 4 angeordnet ist. Eine derartige Anordnung ist etwa in den Fig. 13 bis 17 dargestellt.

Der zweite Messfühler 2 ist zumindest bereichsweise mit dem Halteelement 3, 4 verbunden. Vorzugsweise liegt dieser Plan an dem Haltelement 3, 4 an.

Das Halteelement 3, 4 weist vorzugsweise die Form eines trapezförmigen Rahmens auf oder einer Wanne 4, wobei die Wanne 4 einen trapezförmigen oder rechteckigen Grundriss aufweisen kann und die Unterseite und die Innenseite der Wanne 4 vorzugsweise planparallele Platten sein können. Dadurch schmiegen sich die Messfühler 1, 2 besonders gut und vorteilhaft an das Haltelement 3 an. Bevorzugt weist das Halteelement 3, 4 eine Aufnahme für den ersten Messfühler 1 auf. Dies kann sowohl bei der Ausführung als Rahmen als auch bei der als Wanne 4 vorgesehen sein.

Da es für die Erfindung vorteilhaft ist, wenn der erste Messfühler 1 möglichst plan an der Heizfläche 15 anliegt, kann es vorgesehen sein, dass der erste Messfühler 1, insbesondere der erste Tragkörper, im Bereich der Kontaktierungsstelle 8 mittels wenigstens einem elastisch federnden Verbindungsmittel, vorzugsweise einer Feder 5, insbesondere einer Metallfeder, vor allem einer U-Feder oder Z-Feder, mit dem zweiten Messfühler 2 und/oder dem Halteelement 3, 4 verbunden ist.

Um die elastisch federnden Verbindungsmittel sicher und dauerhaft mit dem ersten Messfühler 1, dem zweiten Messfühler 2 und/oder dem Halteelement 3, 4 zu verbinden, sind bevorzugt thermisch stabile Verbindungsmittel vorgesehen, insbesondere Schrauben und/oder Nieten 6, 7. Vor allem ist vorgesehen Nieten zu verwenden, da diese dauerhaft fest sind, thermisch stabil, billig und automatisch montiert werden können.

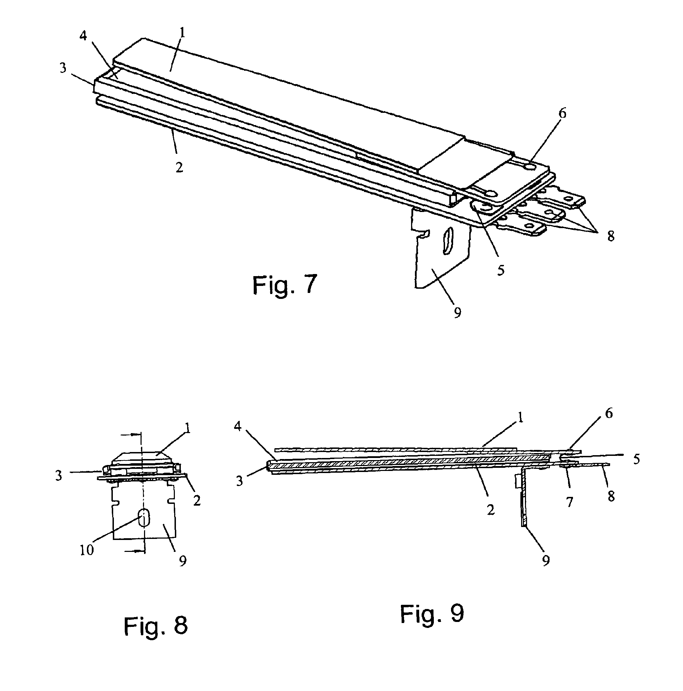

Bei der Verwendung von Nieten 6, 7 oder auch von Schrauben oder Ähnlichem kann es vorkommen, dass Köpfe von Schrauben und/oder Nieten 6, 7 über die Oberfläche des ersten Messfühlers 1 hinausragen würden und dadurch dessen Planlage verhindern. Es kann bei einer besonders einfachen und kostengünstigen Ausführungsform der Erfindung vorgesehen sein, dies zu akzeptieren. Dabei wird durch die Köpfe der Nieten 6, 7 ein Keilspalt gebildet. Bevorzugt ist allerdings vorgesehen, dass der erste Messfühler 1 möglichst plan auf der Heizfläche 15 aufliegt. Dies kann wie bereits dargelegt durch Beschichten der Oberfläche mit einer thermisch leitenden Passivierschicht erfolgen, wobei die thermisch leitende Passivierschicht auch die Köpfe der Schrauben und Nieten 6, 7 verdeckt. Es kann jedoch anstatt bzw. zusätzlich dazu vorgesehen sein, dass der erste Messfühler 1 im Bereich der Kontaktierungsstelle 8 eine stufenförmige Absenkung aufweist, welche tiefer ist als die Mittel der thermisch stabilen Verbindung, wobei bei vollständig in der Aufnahme des Halteelements 3, 4 angeordnetem ersten Messfühler 1 die erste Widerstandbahn 23 im Wesentlichen parallel zur zweiten Widerstandsbahn angeordnet ist. Durch die stufenförmige Absenkung kann der erste Messfühler 1 plan auf der Heizfläche 15 aufliegen ohne das dies durch die Köpfe der Nieten 6, 7 behindert würde. Um einen ersten Messfühler 1 möglichst einfach aufzubauen, kann es vorgehen sein, dass der erste Tragkörper im Bereich der stufenförmigen Absenkung mehrteilig ausgeführt ist. Dadurch kann der messtechnisch wichtige Teil als planer Teil ausgeführt sein, welcher mit einem weiteren Teil verbunden ist, und dadurch eine Stufe bildet, wie dies etwa in den Fig. 7 und 9 dargestellt ist.

Zur Montage und Justage innerhalb einer durch eine Wärmequelle 16 und eine Heizfläche 15 gebildeten Heizraum ist bevorzugt ein im Wesentlichen winkelförmiger Haltebügel 9 vorgesehen, welcher mit dem zweiten Messfühler 2 und/oder dem Halteelement 3, 4 verbunden, insbesondere vernietet oder verschraubt, ist. Sofern der Haltebügel 9 mit dem Halteelement 3, 4 verbunden ist, kann bei besonders bevorzugten Ausführungsformen vorgesehen sein, dass der Haltebügel 9 eine Aufnahme, insbesondere eine Einschubaufnahme, für den zweiten Messfühler 2 aufweist, wodurch ein zweiter Messfühler besonders einfach appliziert werden kann. Zur Montage und Justage, ist vorzugsweise ein vertikal verlaufendes Langloch 10 in einer in Gebrauchslage vertikalen Fläche des Haltebügels 9 vorgesehen.

## Patentansprüche

1. Anordnung umfassend eine Wärmequelle (16), eine Heizfläche (15) und eine Messfühleranordnung zur Ermittlung der Temperaturverhältnisse im Bereich der von der Wärmequelle (16) erwärmten Heizfläche (15), wobei die Messfühleranordnung zwischen der Wärmequelle (16) und der Heizfläche (15) im Wesentlichen parallel zur Heizfläche (15) angeordnet ist, wobei die Messfühleranordnung einen ersten Messfühler (1) umfasst, welcher einen ersten Tragkörper und wenigstens eine auf dem ersten Tragkörper angeordnete temperaturabhängige erste Widerstandbahn (23) umfasst, und die erste Widerstandsbahn (23) des ersten Messfühlers (1) der Heizfläche (15) zugewandt ist und außerhalb eines temperatursensitiven Bereichs an einer Kontaktierungsstelle (8) elektrisch kontaktiert ist, wobei wenigstens ein zweiter Messfühler (2) vorgesehen ist, welcher einen zweiten Tragkörper, insbesondere umfassend Keramik, und wenigstens eine auf dem zweiten Tragkörper angeordnete temperaturabhängige zweite Widerstandbahn umfasst, welche außerhalb des temperatursensitiven Bereichs an einer Kontaktierungsstelle (8) elektrisch kontaktiert ist, **dadurch gekennzeichnet, dass** die zweite Widerstandsbahn des zweiten Messfühlers der Wärmequelle (16) zugewandt ist.

2. Anordnung nach Anspruch 1, **dadurch gekennzeichnet, dass** die erste Widerstandbahn (23) und/oder die zweite Widerstandbahn eine Mäanderform aufweisen, und vorzugsweise in Dickschicht-Technik ausgeführt sind.

3. Anordnung nach Anspruch 1 oder 2, **dadurch gekennzeichnet, dass** der erste Messfühler (1) und/oder der zweite Messfühler (2) im Wesentlichen baugleich ausgeführt sind oder dass der zweite Messfühler (2) größer als der erste Messfühler (1) ausgeführt ist.

4. Anordnung nach Anspruch 1, 2 oder 3, **dadurch gekennzeichnet, dass** der zweite Messfühler (2) strahlungsabsorbierend ausgeführt ist.

5. Anordnung nach einem der Ansprüche 1 bis 4, **dadurch gekennzeichnet, dass** die erste Widerstandbahn (23) und/oder die zweite Widerstandbahn zwischen der Kontaktierungsstelle (8) und dem temperatursensitiven Bereich einen größeren, insbesondere einen doppelten, Querschnitt (23a) aufweisen als im temperatursensitiven Bereich.

6. Anordnung nach einem der Ansprüche 1 bis 5, **dadurch gekennzeichnet, dass** sich die Messfühleranordnung zur Verbesserung der mechanischen Stabilität gegen das freie, von der Kontaktierungsstelle (8) abgekehrte Ende hin verjüngt.

7. Anordnung nach einem der Ansprüche 1 bis 6, **dadurch gekennzeichnet, dass** zur Kontaktierung der ersten Widerstandbahn (23) und/oder der zweiten Widerstandbahn wenigstens ein Kontaktierungsstück aus elastisch federndem Material vorgesehen ist, welches mit dem Tragkörper verbunden, vorzugsweise vernietet ist.

8. Anordnung nach einem der Ansprüche 1 bis 7, **dadurch gekennzeichnet, dass** die Widerstandsbahn (23) des ersten Messfühlers (1) und/oder des zweiten Messfühlers (2) mit einer geschlossen, thermisch leitenden Passivierschicht isoliert ist.

9. Anordnung nach einem der Ansprüche 1 bis 8, **dadurch gekennzeichnet, dass** zwischen dem ersten Messfühler (2) und dem zweiten Messfühler (3) ein Halteelement (3, 4) angeordnet ist.

10. Anordnung nach Anspruch 9, **dadurch gekennzeichnet, dass** das Halteelement (3, 4) als Bügel und/oder wannenförmig ausgeführt ist, wobei vorzugsweise in dem vom Bügel aufgespannten Raum und/oder in der Wanne (4) ein Isoliermaterial angeordnet ist.

11. Anordnung nach Anspruch 10, **dadurch gekennzeichnet, dass** ein Boden der Wanne (4) Verstärkungsrillen (13) umfasst, wobei die **dadurch** gebildeten Hohlräume (14) der Isolation dienen.

12. Anordnung nach Anspruch 9, 10 oder 11, **dadurch gekennzeichnet, dass** an dem zweiten Messfühler (2) und/oder dem Halteelement (3, 4) eine, sich gegen den ersten Messfühler (1) abstützende Federzunge (11, 12) angeordnet ist.

13. Anordnung nach einem der Ansprüche 9 bis 12, **dadurch gekennzeichnet, dass** der zweite Messfühler (2) zumindest bereichsweise mit dem Halteelement (3, 4) verbunden ist, und/oder dass das Halteelement (3, 4) eine Aufnahme für den ersten Messfühler (1) aufweist.

14. Anordnung nach einem der Ansprüche 9 bis 13, **dadurch gekennzeichnet, dass** der erste Messfühler (1), insbesondere der erste Tragkörper, im Bereich der Kontaktierungsstelle (8) mittels wenigstens einem elastisch federnden Verbindungsmittel, vorzugsweise einer Feder (5), insbesondere einer Metallfeder, vor allem einer U-Feder oder Z-Feder, mit dem zweiten Messfühler (2) und/oder dem Halteelement (3, 4) verbunden ist.

15. Anordnung nach einem der Ansprüche 9 bis 14, **dadurch gekennzeichnet, dass** der erste Messfühler (1) im Bereich der Kontaktierungsstelle (8) eine stufenförmige Absenkung aufweist, welche tiefer ist als die Mittel der thermisch stabilen Verbindung, wobei bei vollständig in der Aufnahme des Halteelements (3, 4) angeordnetem ersten Messfühler (1) die erste Widerstandbahn (23) im Wesentlichen parallel zur zweiten Widerstandsbahn angeordnet ist.

## Claims

1. An arrangement, comprising a heat source (16), a heating surface (15) and a measuring sensor arrangement for determining the temperature conditions in the region of the heating surface (15) heated by the beat source (16), with the measuring sensor arrangement being arranged between the heat source (16) and the heating surface (15) substantially parallel to the heating surface (15), with the measuring sensor arrangement comprising a first measuring sensor (1) which comprises a first support body and at least one temperature-dependent first resistance path (23) arranged on the first support body, and the first resistance path (23) of the first measuring sensor (1) faces the heating surface (15) and makes electric contact at a contact point (8) outside of a temperature-sensitive area, with at least one second measuring sensor (2) being provided which comprises a second support body, especially comprising ceramics, and at least one temperature-dependent second resistance path arranged on the second support body, which second resistance path makes electric contact with a contact point (8) outside of the temperature-sensitive area, **characterized in that** the second resistance path of the second measuring sensor faces the heat source (16).

2. An arrangement according to claim 1, **characterized in that** the first resistance path (23) and/or the second resistance path have a meandering form and are preferably arranged in thick-film technology.

3. An arrangement according to claim 1 or 2, **characterized in that** the first measuring sensor (1) and/or the second measuring sensor (2) are arranged substantially similarly, or the second measuring sensor (2) is arranged to be larger than the first measuring sensor (1).

4. An arrangement according to claim 1, 2 or 3, **characterized in that** the second measuring sensor (2) is arranged to be radiation-absorbing.

5. An arrangement according to one of the claims 1 to 4, **characterized in that** the first resistance path (23) and/or the second resistance path have a larger, especially a double, cross section (23a) between the contact point (8) and the temperature-sensitive area than in the temperature-sensitive area.

6. An arrangement according to one of the claims 1 to 5, **characterized in that** the measuring sensor arrangement tapers towards the free end facing away from the contact point (8) in order to improve mechanical stability.

7. An arrangement according to one of the claims 1 to 6, **characterized in that** at least one contact element made of elastically resilient material is provided for making contact with the first resistance path (23) and/or the second resistance path, which material is connected with the support body, preferably riveted to the same.

8. An arrangement according to one of the claims 1 to 7, **characterized in that** the resistance path (23) of the first measuring sensor (1) and/or second measuring sensor (2) is insulated with a sealed, thermally conductive passivation layer.

9. An arrangement according to one of the claims 1 to 8, **characterized in that** a holding element (3, 4) is arranged between the first measuring sensor (1) and the second measuring sensor (2).

10. An arrangement according to claim 9, **characterized in that** the holding element (3, 4) is arranged as a bracket and/or in a trough-like way, with an insulating material preferably being arranged in the space covered by the bracket and/or in the trough (4).

11. An arrangement according to claim 10, **characterized in that** a floor of the trough (4) comprises reinforcing ribs (13), with the cavities (14) thus formed being used for insulation.

12. An arrangement according to claim 9, 10 or 11, **characterized in that** an elastic tongue (11, 12) resting on the first measuring sensor (1) is arranged on the second measuring sensor (2) and/or the holding element (3, 4).

13. An arrangement according to one of the claims 9 to 12, **characterized in that** the second measuring sensor (2) is connected at least in sections with the holding element (3, 4), and/or that the holding element (3, 4) comprises a receiver for the first measuring sensor (1).

14. An arrangement according to one of the claims 9 to 13, **characterized in that** the first measuring sensor (1), especially the first support body, is connected with the second measuring sensor (2) and/or the holding element (3, 4) in the region of the contact point (8) by means of at least one elastically resilient connecting means, preferably a spring (5), especially a metal spring, in particular a U-spring or Z-spring.

15. An arrangement according to one of the claims 9 to 14, **characterized in that** the first measuring sensor (1) comprises a stepped depression in the region of the contact point (8), which depression is lower than the means of the thermally stable connection, with the first resistance path (23) being arranged substantially parallel to the second resistance path when the first measuring sensor (1) is arranged completely in the receiver of the holding element (3, 4).

## Revendications

1. Dispositif comprenant une source de chaleur (16), une surface chauffante (15) et un dispositif de sondes de mesure pour la détermination des conditions de température au niveau de la surface chauffante (15) chauffée par la source de chaleur (16), dans lequel le dispositif de sondes de mesure est disposé entre la source de chaleur (16) et la surface chauffante (15) de façon sensiblement parallèle à la surface chauffante (15), dans lequel le dispositif de sondes de mesure comprend une première sonde de mesure (1) dépendante de la température qui comprend un premier corps portant et au moins une première piste de résistance (23) disposée sur le premier corps portant, et la première piste de résistance (23) de la première sonde de mesure (1) est tournée vers la surface chauffante (15) et mise en contact électrique en dehors d'une zone sensible à la température sur un point de contact (8), dans lequel est prévue au moins une deuxième sonde de mesure (2) qui comprend un deuxième corps portant, comprenant en particulier de la céramique, et au moins une deuxième piste de résistance dépendante de la température disposée sur le deuxième corps portant, qui est mise en contact électrique en dehors d'une zone sensible à la température sur un point de contact (8), **caractérisé en ce que** la deuxième piste de résistance de la deuxième sonde de mesure est tournée vers la source de chaleur (16).

2. Dispositif selon la revendication 1, **caractérisé en ce que** la première piste de résistance (23) et/ou la deuxième piste de résistance ont une forme sinueuse et sont réalisées de préférence par la technique de couche épaisse.

3. Dispositif selon la revendication 1 ou 2, **caractérisé en ce que** la première sonde de mesure (1) et/ou la deuxième sonde de mesure (2) sont pour l'essentiel de construction identique ou **en ce que** la deuxième sonde de mesure (2) est plus grande que la première sonde de mesure (1).

4. Dispositif selon la revendication 1, 2 ou 3, **caractérisé en ce que** la deuxième sonde de mesure (2) est réalisée de façon à absorber les rayonnements.

5. Dispositif selon l'une des revendications 1 à 4, **caractérisé en ce que** la première piste de résistance (23) et/ou la deuxième piste de résistance présentent entre le point de contact (8) et la zone sensible à la température une plus grande section (23a) que dans la zone sensible à la température, en particulier deux fois plus grande.

6. Dispositif selon l'une des revendications 1 à 5, **caractérisé en ce que** le dispositif de sondes de mesure se resserre, afin d'améliorer sa stabilité mécanique, en direction de l'extrémité libre située à l'opposé du point de contact (8).

7. Dispositif selon l'une des revendications 1 à 6, **caractérisé en ce que** pour la mise en contact de la première piste de résistance (23) et/ou de la deuxième piste de résistance, il est prévu au moins un élément de contact fait d'un matériau élastique, qui est assemblé au corps portant, de préférence riveté.

8. Dispositif selon l'une des revendications 1 à 7, **caractérisé en ce que** la piste de résistance (23) de la première sonde de mesure (1) et/ou de la deuxième sonde de mesure (2) est isolée par une couche de passivation fermée et conductrice thermique.

9. Dispositif selon l'une des revendications 1 à 8, **caractérisé en ce qu'**un élément de maintien (3, 4) est disposé entre la première sonde de mesure (1) et la deuxième sonde de mesure (2).

10. Dispositif selon la revendication 9, **caractérisé en ce que** l'élément de maintien (3, 4) est réalisé en forme d'étrier et/ou de cuvette, un matériau isolant étant de préférence disposé dans l'espace couvert par l'étrier et/ou dans la cuvette (4).

11. Dispositif selon la revendication 10, **caractérisé en ce que** le fond de la cuvette (4) présente des nervures de renfort (13), les cavités (14) ainsi formées servant à l'isolation.

12. Dispositif selon la revendication 9, 10 ou 11, **caractérisé en ce qu'**une languette de ressort (11, 12) appuyée contre la première sonde de mesure (1) est disposée sur la deuxième sonde de mesure (2) et/ou sur l'élément de maintien (3, 4).

13. Dispositif selon l'une des revendications 9 à 12, **caractérisé en ce que** la deuxième sonde de mesure (2) est reliée au moins en partie à l'élément de maintien (3, 4) et/ou **en ce que** l'élément de maintien (3, 4) présente un logement pour la première sonde de mesure (1).

14. Dispositif selon l'une des revendications 9 à 13, **caractérisé en ce que** la première sonde de mesure (1), en particulier le corps portant, est reliée au niveau du point de contact (8) au moyen d'au moins un moyen de liaison élastique, de préférence d'un ressort (5), en particulier d'un ressort métallique, notamment un ressort en U ou un ressort en Z, à la deuxième sonde de mesure (2) et/ou à l'élément de maintien (3, 4).

15. Dispositif selon l'une des revendications 9 à 14, **caractérisé en ce que** la première sonde de mesure (1) présente au niveau du point de contact (8) un creux en gradin qui est plus profond que les moyens de liaison stable du point de vue thermique, la première piste de résistance (23) étant sensiblement parallèle à la deuxième piste de résistance quand la première sonde de mesure (1) est entièrement disposée dans le logement de l'élément de maintien (3, 4).
